# FASCICULE DE BREVET EUROPEEN

(11) **EP 1 858 314 B1**
(45) Date de publication et mention de la délivrance du brevet: **19.11.2008**
(21) Numéro de dépôt: 06726210.5
(22) Date de dépôt: 01.03.2006
(51) Int. Cl.: A01D 34/66, A01D 34/81

(54) **PROCEDE DE REALISATION D'UN CARTER DE BARRE DE COUPE D'UNE FAUCHEUSE A DISQUES ET CARTER OBTENU**
VERFAHREN ZUR HERSTELLUNG EINES GEHÄUSES FÜR EINEN MÄHERSCHNEIDBALKEN UND SO HERGESTELLTES GEHÄUSE
METHOD OF PRODUCING A HOUSING FOR A MOWER CUTTER BAR AND HOUSING THUS PRODUCED

(30) Priorité: 08.03.2005 FR 0550603
(43) Date de publication de la demande: 28.11.2007
(73) Titulaire: KUHN S.A., 67700 Saverne (FR)
(72) Inventeur: WALTER, René, F-57620 Goetzenbruck (FR); KIRCH, Jacky, F-67700 Otterswiller (FR)
(74) Mandataire: Andres, Jean-Claude
(86) Numéro de dépôt international: PCT/FR2006/050186
(87) Numéro de publication internationale: WO 2006/095106

(56) Documents cités:
- FR-A- 2 255 835
- US-A- 4 738 328
- US-A- 5 212 936
- US-A- 5 221 585
- US-A- 6 052 980

## Description

L'invention concerne un procédé de réalisation d'un carter de barre de coupe d'une faucheuse à disques et le carter obtenu (voir e.g. FR-A-2 255 835).

Les faucheuses à disques comportent une barre de coupe de dimension importante pouvant aller jusqu'à plus de quatre mètres et disposant de multiples disques rotatifs dont la fonction est la coupe des plantes.

Les disques sont montés sur des paliers disposés à intervalles plus ou moins réguliers sur la barre de coupe. Ces disques sont entraînés en rotation au moyen d'un train de pignons incorporés dans un carter étanche contenant un lubrifiant tel que de l'huile.

Le train de pignons est actionné par des moyens de transmission aptes à transmettre l'énergie nécessaire depuis le véhicule porteur, généralement un tracteur, jusqu'au carter.

Il est important que le carter soit relativement léger et souple pour un meilleur suivi des dénivellations du sol. Il doit aussi être parfaitement étanche à la fois pour éviter les fuites de lubrifiant et pour empêcher la pénétration de particules externes dans le train de pignons.

Les fuites de lubrifiant entraîneraient une usure prématurée des pignons et une pollution de l'environnement. L'entrée de débris de coupe et de poussières dans le carter pourrait provoquer une usure prématurée des engrenages et une moindre efficience mécanique.

Selon une technique actuelle de réalisation, le carter de barre de coupe d'une faucheuse se présente sous forme d'un parallélépipède allongé fabriqué par l'assemblage de deux plaques profilées de grandes longueurs ou de deux plaques embouties pour leur donner la forme du carter.

Avant assemblage des deux plaques, lesdites plaques subissent une première opération de pré-découpe ou de pré-poinçonnage aux endroits où seront montés les paliers de disques et les pignons d'entraînement intermédiaires.

Selon un premier mode de réalisation, il est ensuite procédé à l'assemblage des deux parties par soudure avec apport de matière et finalement à l'usinage aux dimensions définitives des orifices pour le montage des paliers de disques et des pignons d'entraînement intermédiaires.

Selon un autre mode de réalisation, les deux plaques sont assemblées au moyen de boulons de serrage. Dans ce cas, les plaques sont percées sur leur pourtour de trous de passage pour des boulons de serrage et ensuite, les orifices pour le montage des paliers de disques et des pignons d'entraînement intermédiaires sont usinés aux dimensions définitives.

Ces procédés comportent un grand nombre d'opérations qui nécessitent un temps de réalisation important.

D'autre part, dans la technique traditionnelle de soudage à l'arc il est amené aux pièces à assembler une grande quantité de chaleur. Cette quantité de chaleur s'étend sur une large zone autour de la surface à souder et provoque souvent d'importantes déformations sur les parties à assembler.

Ces déformations peuvent être réduites, voire maîtrisées, mais cela nécessite des actions onéreuses et des rebuts sont tout de même à craindre.

En effet, des déformations du carter peuvent induire divers problèmes pour le fonctionnement du train de pignons et de la faucheuse elle-même, ces déformations sont donc à limiter autant que possible.

La technique de soudage traditionnelle à l'arc nécessite donc la prise d'importantes précautions et se traduit en final par une qualité très liée au savoir faire de l'opérateur et difficile à maîtriser. Ils nécessitent en outre une reprise pour usiner les orifices de montage des paliers de disques et des pignons d'entraînement intermédiaires aux dimensions définitives.

L'invention a pour objectif de simplifier la réalisation des carters des barres de coupe des faucheuses à disques.

A cet effet, l'invention concerne un procédé de réalisation d'un carter de barre de coupe d'une faucheuse à disques et le carter obtenu, caractérisé par la succession des étapes suivantes :
- profilage d'une plaque métallique supérieure et d'une plaque métallique inférieure du carter,
- assemblage de la plaque profilée supérieure et de la plaque profilée inférieure par soudage pour constituer une enveloppe,
- découpe sur l'enveloppe, au moyen d'un rayon laser, d'orifices destinés à recevoir les paliers de disques et les pignons d'entraînement intermédiaires,
- fermeture des deux extrémités de l'enveloppe.

Le procédé de réalisation d'un carter de barre de coupe d'une faucheuse à disques et le carter obtenu selon l'invention présentent de nombreux avantages par rapport à la technique connue.

Ce nouveau procédé comporte moins d'opérations, les carters sont donc fabriqués plus rapidement.

Des carters identiques sont obtenus d'une fabrication à une autre.

La découpe au rayon laser est précise et fiable. Elle permet la réalisation d'orifices exactement à la dimension souhaitée et un usinage extrêmement satisfaisant, sans qu'une opération de reprise ultérieure soit nécessaire. Elle réalise en sus un léger traitement thermique de la surface de l'alésage découpé.

La découpe au laser autorise la réalisation d'orifices complexes, permettant éventuellement l'emploi de pièces hors standards.

Le procédé permet aussi bien l'utilisation de plaques préalablement coupées à la longueur de la barre de coupe de la faucheuse avant la fabrication du carter que l'emploi des plaques standard, par exemple de 6 mètres de longueur, qui ne sont coupées à la dimension voulue en fonction des besoins qu'après leur assemblage et éventuellement après la découpe des orifices au rayon laser.

Selon une autre caractéristique, l'assemblage de la plaque profilée supérieure et de la plaque profilée inférieure est effectué par soudage au moyen d'un rayon laser sans apport de matière. Les soudures au laser ne nécessitent pas d'apport de matière et n'engendrent pratiquement pas de déformations sur les parties à assembler. Les soudures sont donc facilement reproductibles et d'une grande précision.

D'autres caractéristiques et avantages de l'invention se dégageront de la description qui va suivre en regard des dessins annexés qui ne sont donnés qu'à titre d'exemples non limitatifs.
La figure 1 représente une vue en perspective de la plaque profilée supérieure.
La figure 2 représente une vue en perspective de la plaque profilée inférieure.
La figure 3 représente les deux plaques profilées assemblées par soudure au laser.
La figure 4 représente les deux plaques assemblées et découpées au rayon laser, le carter étant fermé aux deux extrémités.
La figure 5 représente une coupe longitudinale de la barre de coupe avec quelques disques et quelques pignons d'entraînement.

Selon l'invention le carter de la barre de coupe d'une faucheuse à disques est constitué de deux plaques métalliques mises en forme dans une opération de profilage préalablement à leur assemblage.

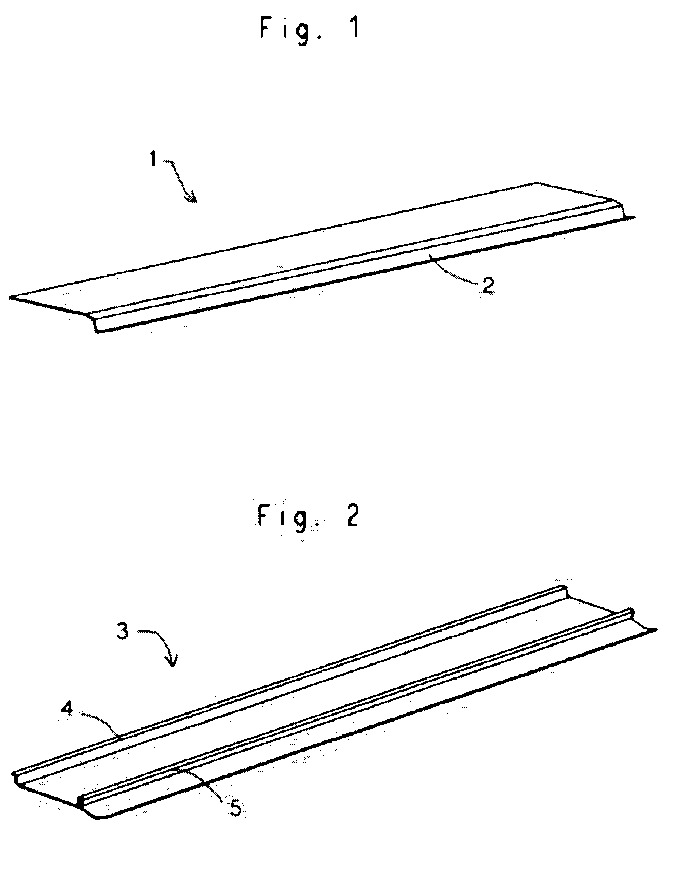

La figure 1 représente la plaque profilée supérieure 1 du carter, disposant d'une partie pliée vers le bas destinée à former le bord arrière 2 du carter.

La figure 2 illustre la plaque profilée inférieure 3 du carter comportant notamment un bord avant 4 plié vers le haut. Elle possède avantageusement une cloison sensiblement verticale 5 obtenue par pliage. Celle-ci est située à proximité de la partie arrière du carter pour augmenter sa rigidité et pour limiter le volume dans lequel se situent les pignons d'entraînement. Cette limitation du volume permet par exemple de réduire la quantité de lubrifiant nécessaire au bon fonctionnement desdits pignons.

Les deux plaques inférieure 3 et supérieure 1 sont amenées au contact l'une de l'autre de manière à ce que la partie avant de la plaque supérieure 1 repose sur le méplat du bord avant 4 de la plaque inférieure 3, et de manière à ce que le bord arrière 2 repose sur la plaque inférieure 3.

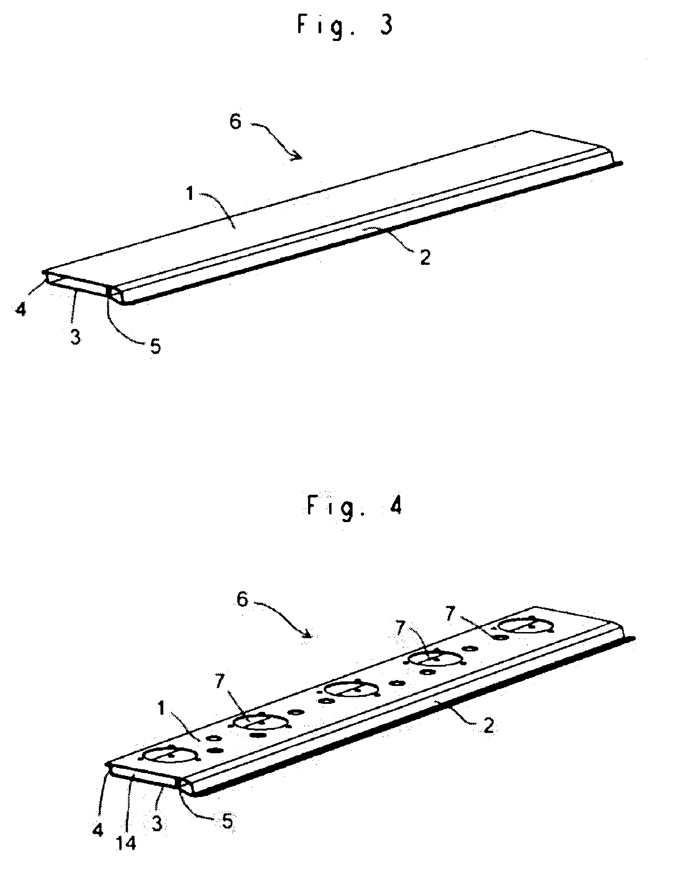

La figure 3 montre l'assemblage des plaques profilées supérieure et inférieure au moyen d'un soudage au rayon laser, sans apport de matière, ce qui conduit à la formation de l'enveloppe 6 du carter. La soudure est effectuée en continue sur la longueur complète des plaques au niveau des lignes de contact du bord arrière 2 et du bord avant 4.

L'enveloppe 6 ainsi formée par soudage est de forme globalement parallélépipédique avec une cloison interne 5 et deux extrémités latérales ouvertes.

Le soudage est réalisé en mettant les deux parties des plaques profilées en contact et en pression puis en focalisant un rayon laser de haute énergie au niveau de l'interface entre lesdites deux parties à assembler pour les échauffer et fondre les métaux.

Avec un rayon laser une grande énergie est focalisée sur une petite surface, ce qui provoque au niveau de l'interface la fusion localisée des deux parties en contact et la diffusion de matière. Cette diffusion de matière permet la création de la liaison entre les deux parties métalliques, et donc une soudure étanche lors du refroidissement.

Une fois l'enveloppe 6 créée le procédé selon l'invention prévoit de réaliser des orifices 7, par découpe au moyen d'un rayon laser de haute énergie, dans l'enveloppe 6. La figure 4 présente plusieurs orifices 7 découpés dans ladite enveloppe 6.

Ces orifices 7 sont destinés à recevoir les paliers 10 des disques de coupe 8 de la faucheuse et les pignons d'entraînement intermédiaires 12.

La découpe au rayon laser présente l'avantage d'une découpe extrêmement propre avec un aspect lisse qui rend un usinage ultérieur superflu.

L'extrême précision de la découpe permet un ajustement précis des éléments complémentaires ajoutés et donc la réalisation d'un ensemble pouvant facilement être rendu étanche.

Dans une dernière étape les extrémités de l'enveloppe sont fermées, par soudage de bords latéraux 14 rapportés. La soudure de ces bords latéraux peut s'effectuer de manière classique avec apport de matière ou être réalisée par soudure au rayon laser.

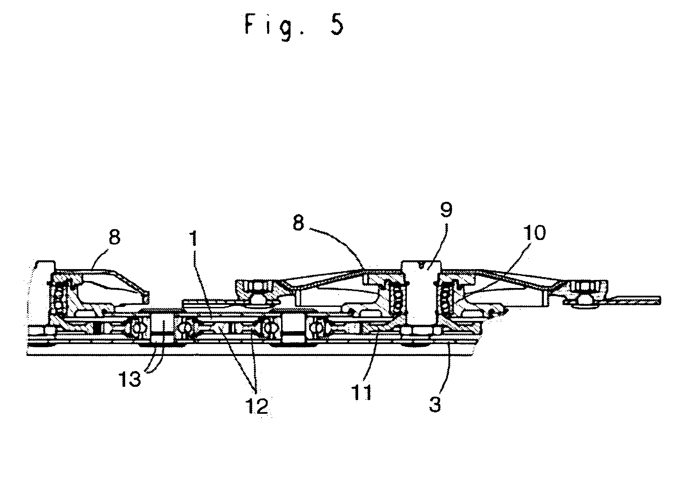

La figure 5 illustre un carter selon l'invention dans une vue en coupe avec des disques de coupe 8 qui sont reliés à des axes 9 logés dans des paliers 10 qui sont fixés sur la plaque supérieure 1 du carter au moyen de vis traversantes. Chaque axe 9 porte à son extrémité située dans le carter un pignon d'entraînement 11 qui engrène avec des pignons intermédiaires 12 qui sont montés rotatifs sur des supports 13 solidaires des plaques supérieures 1 et inférieures 3 du carter. Lesdits pignons d'entraînement 11 et 12 assurent ainsi l'entraînement en rotation de tous les disques 8 de la barre de coupe. Au niveau des paliers 10 et des supports 13 sont disposés des joints qui assurent une étanchéité parfaite du carter afin d'éviter les déperditions de lubrifiant et la pénétration de corps étrangers.

Les différentes étapes du procédé permettent un gain de temps appréciable pour la fabrication d'un carter et de la barre de coupe complète d'une faucheuse.

Les nombreux avantages inhérents au procédé, notamment la vitesse, la grande précision et la bonne qualité de la soudure et de la découpe au laser, permettent une nette amélioration du prix de revient de fabrication du carter, lequel carter est obtenu avec une grande précision et une reproductibilité élevée.

L'invention concerne également le carter de barre de coupe d'une faucheuse à disques obtenu par assemblage et soudage d'une plaque supérieure 1 profilée et d'une plaque inférieure 3 profilée de manière à avoir une enveloppe 6 sur laquelle sont découpés, au moyen d'un rayon laser, des orifices 7 destinés à recevoir des paliers 10 de disques 8 et des supports 13 de pignons d'entraînement intermédiaires 12.

Les plaques profilées 1 et 3 sont assemblées par soudure au moyen d'un rayon laser, sans apport de matière. Enfin, les extrémités de l'enveloppe 6 sont fermées par soudage, soit d'une manière classique avec apport de matière soit par rayon laser, de bords latéraux 14 rapportés.

Plusieurs variantes sont possibles pour le procédé de fabrication du carter de barre de coupe d'une faucheuse sans sortir du cadre de l'invention.

Il peut notamment être envisagé la découpe du carter à la longueur de la barre de coupe de la faucheuse après fabrication de l'enveloppe et même après la découpe des orifices. C'est-à-dire qu'il peut être employé des parties profilées plus ou moins importantes pour la réalisation de l'enveloppe, la découpe à la longueur de la barre de coupe de la faucheuse étant effectuée en dernière étape de fabrication juste avant la fermeture des extrémités de l'enveloppe.

Il peut aussi être envisagé de découper les plaques profilées avant assemblage de l'enveloppe, sans sortir du cadre de l'invention, ou, en variante, la découpe des plaques destinées à la fabrication des plaques profilées, avant profilage.

Cette découpe de l'enveloppe du carter, des plaques ou des plaques profilées elles-mêmes pouvant être réalisée de manière traditionnelle ou de préférence par découpe au rayon laser.

## Revendications

1. Procédé de réalisation d'un carter de barre de coupe d'une faucheuse à disques, ***caractérisé par*** la succession des étapes suivantes :
- profilage de la plaque supérieure (1) et de la plaque inférieure (3) du carter,
- assemblage de la plaque profilée supérieure (1) et de la plaque profilée inférieure (3) par soudage pour constituer une enveloppe (6),
- découpe sur l'enveloppe (6), au moyen d'un rayon laser, d'orifices (7) destinés à recevoir les paliers (10) de disques (8) et les supports (13) de pignons d'entraînement intermédiaires (12).

2. Procédé de réalisation d'un carter de barre de coupe d'une faucheuse à disques selon la revendication 1, ***caractérisé par le fait* que** l'assemblage de la plaque profilée supérieure (1) et de la plaque profilée inférieure (3) se fait par soudage au moyen d'un rayon laser, sans apport de matière.

3. Procédé de réalisation d'un carter de barre de coupe d'une faucheuse à disques selon la revendication 1 ou 2, ***caractérisé par le fait* que** l'enveloppe (6) formée est fermée aux deux extrémités, avec des bords latéraux (14) rapportés, par soudage avec apport de matière.

4. Procédé de réalisation d'un carter de barre de coupe d'une faucheuse à disques selon la revendication 1 ou 2, ***caractérisé par le fait* que** l'enveloppe (6) formée est fermée aux deux extrémités, avec des bords latéraux (14) rapportés, par soudage au rayon laser, sans apport de matière.

5. Procédé de réalisation d'un carter de barre de coupe d'une faucheuse à disques selon la revendication 1, ***caractérisé par le fait* que** la plaque supérieure (1) et la plaque inférieure (3) qui constituent l'enveloppe (6) du carter sont découpées à la longueur de la barre de coupe de la faucheuse avant profilage.

6. Procédé de réalisation d'un carter de barre de coupe d'une faucheuse à disques selon la revendication 1, ***caractérisé par le fait* que** la découpe du carter à la longueur de la barre de coupe de la faucheuse est réalisée après fabrication de l'enveloppe (6).

7. Procédé de réalisation d'un carter de barre de coupe d'une faucheuse à disques selon la revendication 1, ***caractérisé par le fait* que** la découpe du carter à la longueur de la barre de coupe de la faucheuse est réalisée après fabrication de l'enveloppe (6) et après découpe des orifices (7).

8. Procédé de réalisation d'un carter de barre de coupe d'une faucheuse à disques selon les revendications 5, 6 ou 7, ***caractérisé par le fait* que** la découpe du carter à la longueur de la barre de coupe est réalisée au moyen d'un rayon laser.

9. Carter de barre de coupe d'une faucheuse à disques, ***caractérisé par le fait* qu'**il comporte une plaque supérieure (1) profilée et une plaque inférieure (3) profilée assemblées par soudage de manière à constituer une enveloppe (6) sur laquelle sont découpés, au moyen d'un rayon laser, des orifices (7) destinés à recevoir des paliers (10) de disques (8) et des supports (13) de pignons d'entraînement intermédiaires (12).

10. Carter de barre de coupe d'une faucheuse à disques, ***caractérisé par le fait* que** la plaque supérieure profilée (1) et la plaque inférieure profilée (3) sont assemblées par soudage au moyen d'un rayon laser, sans apport de matière.

11. Carter de barre de coupe selon la revendication 9, ***caractérisé par le fait* que** l'enveloppe (6) formée est fermée aux deux extrémités, avec des bords latéraux (14) rapportés, par soudage avec apport de matière.

12. Carter de barre de coupe selon la revendication 9, ***caractérisé par le fait* que** l'enveloppe (6) formée est fermée aux deux extrémités, avec des bords latéraux (14) rapportés, par soudage au rayon laser, sans apport de matière.

13. Faucheuse à disques, ***caractérisée par le fait* qu'**elle comporte un carter selon l'une quelconque des revendications 9 à 12.

## Claims

1. Method of producing a disc mower cutter bar housing, ***characterized by*** the following successive steps:
- forming the upper plate (1) and the lower plate (3) of the housing,
- assembling the formed upper plate (1) and the formed lower plate (3) by welding in order to form a casing (6),
- cutting out holes (7) on the casing (6), by means of a laser beam, the said holes being intended to receive the bearings (10) of discs (8) and the supports (13) of intermediate drive gears (12).

2. Method of producing a disc mower cutter bar housing according to claim 1, ***characterized in* that** the formed upper plate (1) and the formed lower plate (3) are assembled by welding by means of a laser beam, without addition of material.

3. Method of producing a disc mower cutter bar housing according to claim 1 or 2, ***characterized in* that** the formed casing (6) is closed at the two ends, with fitted lateral edges (14), by welding with addition of material.

4. Method of producing a disc mower cutter bar housing according to claim 1 or 2, ***characterized in* that** the formed casing (6) is closed at the two ends, with fitted lateral edges (14), by laser beam welding, without addition of material.

5. Method of producing a disc mower cutter bar housing according to claim 1, ***characterized in* that** the upper plate (1) and the lower plate (3) which form the casing (6) of the housing are cut to the length of the mower cutter bar before forming.

6. Method of producing a disc mower cutter bar housing according to claim 1, ***characterized in* that** the housing is cut to the length of the mower cutter bar after manufacture of the casing (6).

7. Method of producing a disc mower cutter bar housing according to claim 1, ***characterized in* that** the housing is cut to the length of the mower cutter bar after manufacture of the casing (6) and after cutting out the holes (7).

8. Method of producing a disc mower cutter bar housing according to claims 5, 6 or 7, ***characterized in* that** the housing is cut to the length of the cutter bar by means of a laser beam.

9. Disc mower cutter bar housing, ***characterized in* that** it comprises a formed upper plate (1) and a formed lower plate (3) assembled by welding so as to form a casing (6) on which are cut out, by means of a laser beam, holes (7) intended to receive bearings (10) of discs (8) and supports (13) of intermediate drive gears (12).

10. Disc mower cutter bar housing, ***characterized in* that** the formed upper plate (1) and the formed lower plate (3) are assembled by welding by means of a laser beam, without addition of material.

11. Cutter bar housing according to claim 9, ***characterized in* that** the formed casing (6) is closed at the two ends, with fitted lateral edges (14), by welding with addition of material.

12. Cutter bar housing according to claim 9, ***characterized in* that** the formed casing (6) is closed at the two ends, with fitted lateral edges (14), by laser beam welding, without addition of material.

13. Disc mower, ***characterized in* that** it comprises a housing according to any one of claims 9 to 12.

## Patentansprüche

1. Verfahren zur Herstellung eines Gehäuses eines Mähbalkens eines Scheibenmähers, ***gekennzeichnet* durch** die Aufeinanderfolge der folgenden Schritte:
- Profilierung der oberen Platte (1) und der unteren Platte (3) des Gehäuses,
- Zusammenbau der oberen Profilplatte (1) und der unteren Profilplatte (3) durch Schweißen, um eine Hülle (6) zu bilden,
- in der Hülle (6) mittels eines Laserstrahls Ausschneiden von Öffnungen (7), die dazu bestimmt sind, die Lager (10) von Scheiben (8) und die Stützen (13) von Zwischenantriebszahnrädern (12) aufzunehmen.

2. Verfahren zur Herstellung eines Gehäuses eines Mähbalkens eines Scheibenmähers nach Anspruch 1, ***dadurch gekennzeichnet*, dass** der Zusammenbau der oberen Profilplatte (1) und der unteren Profilplatte (3) durch Schweißen mittels eines Laserstrahls ohne Materialzufuhr erfolgt.

3. Verfahren zur Herstellung eines Gehäuses eines Mähbalkens eines Scheibenmähers nach Anspruch 1 oder 2, ***dadurch gekennzeichnet*, dass** die gebildete Hülle (6) an ihren beiden Enden mit aufgesetzten Seitenrändern (14) durch Schweißen mit Materialzufuhr geschlossen wird.

4. Verfahren zur Herstellung eines Gehäuses eines Mähbalkens eines Scheibenmähers nach Anspruch 1 oder 2, ***dadurch gekennzeichnet*, dass** die gebildete Hülle (6) an ihren beiden Enden mit aufgesetzten Seitenrändern (14) durch Schweißen mittels eines Laserstrahls ohne Materialzufuhr erfolgt.

5. Verfahren zur Herstellung eines Gehäuses eines Mähbalkens eines Scheibenmähers nach Anspruch 1, ***dadurch gekennzeichnet*, dass** die obere Platte (1) und die untere Platte (3), die die Hülle (6) des Gehäuses bilden, auf die Länge des Mähbalkens des Mähers vor der Profilierung geschnitten werden.

6. Verfahren zur Herstellung eines Gehäuses eines Mähbalkens eines Scheibenmähers nach Anspruch 1, ***dadurch gekennzeichnet*, dass** das Schneiden des Gehäuses auf die Länge des Mähbalkens des Mähers nach Herstellung der Hülle (6) erfolgt.

7. Verfahren zur Herstellung eines Gehäuses eines Mähbalkens eines Scheibenmähers nach Anspruch 1, ***dadurch gekennzeichnet*, dass** das Schneiden des Gehäuses auf die Länge des Mähbalkens des Mähers nach Herstellung der Hülle (6) und Ausschneiden der Öffnungen (7) erfolgt.

8. Verfahren zur Herstellung eines Gehäuses eines Mähbalkens eines Scheibenmähers nach den Ansprüchen 5, 6 oder 7, ***dadurch gekennzeichnet*, dass** das Schneiden des Gehäuses auf die Länge des Mähbalkens des Mähers mittels eines Laserstrahls erfolgt.

9. Gehäuse eines Mähbalkens eines Scheibenmähers, ***dadurch gekennzeichnet*, dass** es eine obere Profilplatte (1) und eine untere Profilplatte (3) umfasst, die durch Schweißen zusammengefügt werden, um eine Hülle (6) zu bilden, in der mittels eines Laserstrahls Öffnungen (7) ausgeschnitten werden, die dazu bestimmt sind, Lager (10) von Scheiben (8) und Stützen (13) von Zwischenantriebszahnrädern (12) aufzunehmen.

10. Gehäuse eines Mähbalkens eines Scheibenmähers, ***dadurch gekennzeichnet*, dass** die obere Profilplatte (1) und die untere Profilplatte (3) durch Schweißen mittels eines Laserstrahls ohne Materialzufuhr zusammengefügt werden.

11. Gehäuse eines Mähbalkens nach Anspruch 9, ***dadurch gekennzeichnet,* dass** die gebildete Hülle (6) an den beiden Enden mit aufgesetzten Seitenrändern (14) durch Schweißen mit Materialzufuhr verschlossen wird.

12. Gehäuse eines Mähbalkens nach Anspruch 9, ***dadurch gekennzeichnet,* dass** die gebildete Hülle (6) an den beiden Enden mit aufgesetzten Seitenrändern (14) durch Schweißen mit dem Laserstrahl ohne Materialzufuhr verschlossen wird.

13. Scheibenmäher, ***dadurch gekennzeichnet*, dass** er ein Gehäuse nach irgend einem der Ansprüche 9 bis 12 umfasst.
